# EUROPEAN PATENT APPLICATION

(11) **EP 1 717 744 A1**
(43) Date of publication of application: **02.11.2006**
(21) Application number: 06252271.9
(22) Date of filing: 27.04.2006
(51) Int. Cl.: G06Q 10/00

(54) **Web based interactive tool**

(30) Priority: 27.04.2005 GB 0508593
(71) Applicant: RFI GLOBAL SERVICES LTD, Basingstoke RG23 8BG (GB)
(72) Inventor: Watson, Brian, Tadley RG26 5LE (GB); Lomako, Josef, Tadley RG26 5RQ (GB)
(74) Representative: Frost, Alex John

(57) **Abstract**

Web based interactive tool and method for assessing the compliance of a person or undertaking with the requirements of a statute comprising a computer data output device for presenting a first question to a user relating to a first requirement of statute. A storage device for receiving and storing the response of user to the first question. Processor arranged to select and present a second question to the user related to the first requirement of the statute when it is determined that the first stored response meets a predetermined criterion. Selecting and presenting a third question to the user relating to a different requirement when determined that the stored response to the first question does not meet a predetermined criterion. Assessing compliance with the requirements of the statute based on the user's responses.

## Description

### Background of the Invention

The present invention relates to an apparatus and method for a web based interactive tool for assessing the compliance of a regulation or directive.

The European Community periodically issues directives and regulations that must be adhered to by employers within the member states. In particular, regulations and directives are issued relating to the health and safety of workers. It is a requirement of these regulations and directives that employers must provide evidence of compliance. Therefore, it is often necessary for employers to commission certified external consultants to provide a report showing the compliance or otherwise of the employer for each particular directive or regulation. This report must then need be verified by a qualified person and deposited with the relevant government authority, such as the Health and Safety Executive in the UK, for instance. The increasing number of regulations and directives has proved to be a significant bureaucratic burden on both employers and government agencies charged with recording such compliance.

It is therefore desirable to provide an apparatus and method for determining the compliance of a particular employer with such regulations or directives in order that such compliance may be lodged with the relevant authority in such a way that compliance of the regulation or direction may be proven.

The EU has issued a proposal for a Council Directive on physical agents that includes specific provisions in separate Annexes on noise, vibration, optical radiation and electromagnetic fields. The Physical Agents (Vibration) Directive came into force in July 2002, the Physical Agents (Noise) Directive in February 2003 and the Physical Agents (Electromagnetic Fields) Directive in April 2004. The Physical Agents (Optical Radiation) Directive has not been issued at the time of this application.

The Physical Agents Directives require that an employer assess and, where necessary, measure the levels of risk to which their workers are exposed. The employer must have an assessment of the risk recorded on a suitable medium and this should be updated on a regular basis.

### Summary of the Invention

In a first aspect of the present invention there is provided a method for assessing the compliance of a person or undertaking with the requirements of a statute comprising the following steps: (a) presenting on a data output device of a computer, a first question to a user relating to a first requirement of the statute; (b) receiving and storing in a storage device the response of the user to the first question; (c) selecting and presenting a second question to the user related to the same, first requirement of the statute when it is determined that the stored response of the user to the first question meets a first predetermined criterion; (d) selecting and presenting a third question to the user relating to a different requirement of the statute when it is determined that the stored response of the user to the first question does not meet that first predetermined criterion; and (e) assessing the compliance of the person or undertaking with the requirements of the statute based on the user's responses. This provides an employer with a tool for carrying out a compliance assessment for a particular statute, including European regulations or directives, for instance, without requiring the services of an expert consultant. Questions are put to the employer and the answers are assessed in order to determine which other questions are required, and also to determine whether the employer complies with the particular statute. This assessment is then stored for future reference and may provide proof that the employer complies with a particular statute.

Preferably, the method further comprising: (f) iteratively repeating the steps (a), (b) and (c) or (d) in respect of further requirements of the said statute, prior to the step (e) of assessing the compliance of the person or undertaking with the requirements of the statute. This allows the assessment to be carried by gathering all of the relevant information from the user.

Preferably, the method further comprises: (g) receiving and storing in the storage device an updated response of the user; and (h) repeating the assessing step using the updated response. This allows changes to the employers working environment to be reassessed in order to determine whether or not the employer remains in compliance with the directive or regulation after any such changes have been made.

Optionally, the method may further comprise the step of: (i) providing the user, via the data output device, with assistance relevant to a question when the question is presented to the user. This allows on screen help to be presented to the user in order to help them respond to the questions presented to them. The content of this help is relevant to the particular question being asked at that time and is presented on the same screen.

In a second aspect of the present invention there is provided a web based interactive tool for assessing the compliance of a person or undertaking with the requirements of a statute comprising: a computer data output device for presenting a first question to a user relating to a first requirement of a statute; a storage device for receiving and storing the response of the user to the first question; a processor arranged to select and present a second question to the user related to the same, first requirement of the statute when it is determined that the stored response of the user to the first question meets a first predetermined criterion, selecting and presenting a third question to the user relating to a different requirement of the statute when it is determined that the stored response of the user to the first question does not meet that first predetermined criterion, and assessing the compliance of the person or undertaking with the requirements of the statute based on the user's responses. This has the same advantages of the corresponding method mentioned above.

Preferably, processor of the web based interactive tool is further arranged to iteratively repeat presenting the first question to the user, receiving and storing the response of the user to the first question, and selecting and presenting the second question to the user or selecting and presenting the third question to the user in respect of further requirements of the said statute, prior to assessing the compliance of the person or undertaking with the requirements of the statute.

Optionally, the processor may be further arranged to receive and store in the storage device an updated response of the user and repeating the assessing step using the updated response. This has the same advantages as the corresponding method mentioned above.

Optionally, the processor is further arranged to provide the user, via the data output device, with assistance relevant to a question when the question is presented to the user. This has the same advantages of the corresponding method mentioned above.

The skilled person would understand the method may be performed on a computer or a distributed set of computers such as the Internet. The questions may be stored in a central database or file on one computer and the user may be presented with these questions and enter the responses to these questions on a separate computer.

### Brief Description of the Figures

The present invention may be put into practice in a number of ways and a preferred embodiment will now be described by way of example only, and with reference to the accompanying drawings, in which:

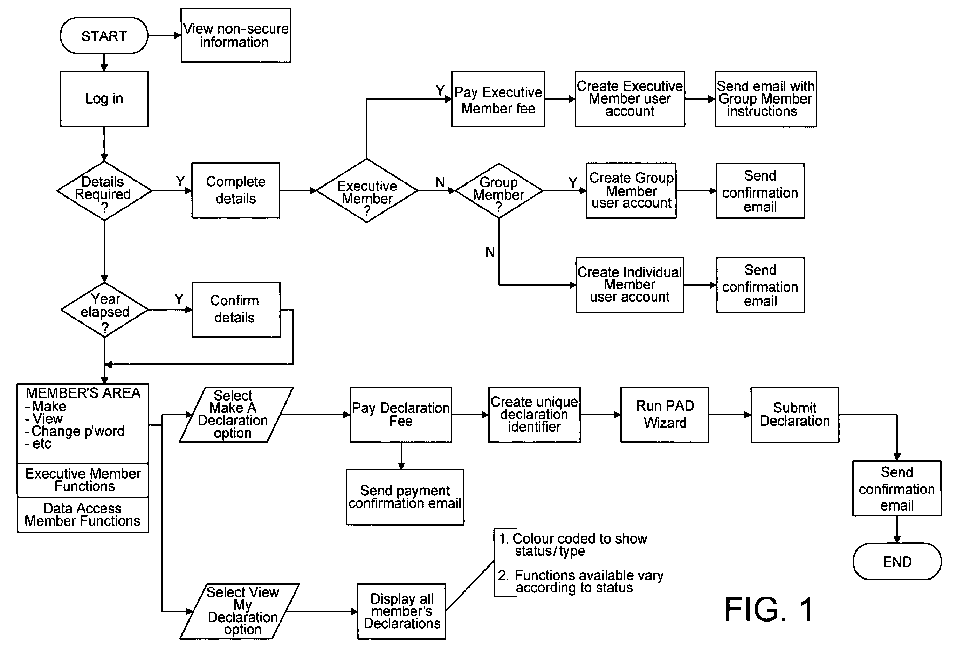

Figure 1 shows a flow diagram of a process performed by a user using a web site to make a declaration of compliance with a statute, including a registration process and a declaration process;
Figure 2 shows a format of a web site screen used to allow a user to make the declaration of compliance;
Figure 3 shows a screen shot of the web site during a stage of a wizard requesting information from the user regarding the user's equipment;
Figure 4 shows a screen shot of the website during a stage of the wizard requesting specific information from the user regarding the user's equipment;
Figure 5 shows a screen shot of the website during a stage of the wizard requesting information from the user regarding the user's safety certification; and
Figure 6 shows a screen shot of the website during a stage of the wizard allowing the user to submit the declaration.

### Detailed description of a preferred embodiment

Internet technology is used to implement a web site. The web site will have two basic functions:
(a) As an information resource on the Directives and the Physical Agents Directive (PAD) Wizards together with a public listing of Physical Agents Directive Statements of Assessment. The PAD Wizard will be described in detail below.
(b) A set of tools, the PAD Wizards that provide user's with a step by step guide to making a Declaration of Assessment for their premises.

Anyone may access the web site and see the public information available in part (a). A pay-per-view seminar will be available in part (a).

To access the tools in part (b) the user must register as a member by completing an on line form. A user account will then be created, and a User ID and password issued allowing the user access to the PAD Wizards.

After registering, the user can use the PAD Wizard to allow them to make a declaration of Assessment with the Physical Agents Directive.

The declarations are stored securely and can be made publicly available as Statements of Assessment, at the declarer's request. These public declarations are accessible in the Public Listing section of the site.

After taking specific details about the Site to which the declaration relates, the PAD Wizard guides the user though a number of questions about the environment of this Site. The answer to any question dictate the next question asked, with each successive question extracting more of the information that is required to make a Declaration of Assessment.

Although, the engine behind the PAD Wizard is complex, wherever possible the input from the user is limited to a simply stated answer.

The user is able to add Internet links and supporting documents throughout the process.

The PAD Wizard includes a context sensitive help system that provides guidance to users unfamiliar with the details of the Directive. This context sensitive help system is known as the Expert.

Once the user has made a declaration for a specific Site, it is stored and the user can re-declare against it as many times as he/she wants within one calendar year of the date of registration with the site.

Within the PAD Wizard , the process follows the natural route that a user takes in assessing their compliance.

All pages have previous and next keys and an indication of where in the process the user is.

The PAD Wizard takes the user to the most basic point in the decision, i.e. a yes/no response to a simple non-technical question, possibly in the form of a tick box. Answering 'Yes' to one of these questions gives a green light to proceed to the next question.

A 'No' response requires the User to enter additional information - the object of which is to get the user to a point where they can respond with a 'Yes' and get the green light to proceed.

The additional information may take a more complex form than a simple yes/no, but wherever possible the input is straightforward for the User to understand, e.g.

A clearly defined value (with defined units)

A selection from a drop down list

A limited size text field

A hyperlink to a document or web site

A scanned document

The Expert online help is always available. The information in the Expert part of the screen is applicable to the item selected. It is possible to further question the Expert by selecting a key (e.g. Fl) or button, which gives access to a list of obvious questions and a search/index function for the help system.

The web site home page is accessible to anyone using the Internet and is minimally secured.

Information entered during the registration process (registering the user with the site) is written to a database, which is protected from unwanted access using standard data security techniques. After registration, the user has access to a member's area, which stores personal information.

Access to, and personal information within, the member's area is protected using unique user names and passwords.

Data entered as part of the PAD Wizard is stored in a secure server and protected using standard data security techniques.

The home page is the unsecured information that is accessible to anyone using the Internet. It has several functions:
A. To give the user an immediate understanding of the purpose of the web site
B. To give any visitor access to the Public Listing
C. As a sales tool for the PAD Wizard

The information shown in table 1 is included.

**Table 1**

| **Information** | **Comment** | |
|---|---|---|
| Web site purpose | A clear explanation of what the site is for | |
| Web site user | A clear explanation as to who the site is for | |
| Frequently asked questions | An easy to use resource for information on (at least) | |
| | | The Physical Agents Directive |
| | | The Declaration Process |
| | | Registration |
| | | Account Types and Membership |
| | | Security |
| | | The Public Listing |
| | | The Expert |
| | | View of dummy Statement of Assessment |
| | | Pre-requisites for making a declaration |
| Links to other related sites | e.g. government sites with information on the Physical Agents Directive, etc. | |
| Access to the Public Listing | A link to an easy to use tool that allows a user to search and view the list of declarations that declarers have chosen to make public. | |
| Information on the PAD Wizard | Must give the user a clear understanding of how the site works, the process that the PAD Wizard follows and what information they require to complete it. This is NOT an in-depth explanation of the contents of the PAD Wizard . | |

### Public Listing

The Public Listing is linked to from the home page. At its most basic it is a list of public declarations of Assessment with the Physical Agents Directive by employers.

### Information in the Public Listing

The list contains the following for each listed declaration:
Company Name
Company Registration Number
Address of premises to which the declaration relates, including postcode
Function to view pdf copy of Statement of Assessment
Function to print pdf copy of Statement of Assessment

### Sorting the Public List

The list may be sorted by:
Company Name (alphabetic, reverse alphabetic)
Company Registration number (numeric, ascending and descending)
Address elements, e.g. Town, County
Postcode (alphabetic, reverse alphabetic)

### Searching the Public List

A search enables the searching of entries by:
Company Name
Company Registration number
Address elements, e.g. Town, County
Postcode

The Member's Area is accessible only when the user has entered a correct user ID and a corresponding password.

All the information that is available on the home page is still accessible without the need to log out and log back in.

The key function available on this page is the *Make a Declaration* PAD Wizard.

The payment details are automatically confirmed by email.

Each declaration is given a unique Declaration Reference Number. This number is used throughout to identify the declaration.

When the user re-declares the Site as compliant at a later date, a different unique declaration reference number is derived, and the original declaration is retained as an historical record.

Declaration reference numbers for a single Site are related so a complete history can be easily obtained.

The PAD Wizard is initiated by the *Make a New (Vibration*/*Noise*/*Electromagnetic Fields*/*Optical Radiation) Declaration* function.

Initially details of the site to which the declaration relates are requested. This together with the unique user ID is used to derive a unique declaration reference number.

Next, the PAD Wizard steps through a series of questions for the user to answer. These questions enable the user to supply the information required and to be confident that they have covered the requirements of the Directive.

The questions are simple and clearly framed, requiring straightforward and constrained answers, e.g. yes/no.

At each stage the user can save the information and exit. They are able to return to this point by opening the declaration from the *View My Declarations* function.

Previous and *Next* keys on each page allow the user to navigate through the PAD Wizard . (Note - the *Next* key is only available once certain information has been entered on the page). A progress indicator is included to show the user how far through the process they are.

Once the user has answered all the required questions, they are able to make a Declaration of Assessment and a Statement of Assessment in pdf format is generated that can be optionally printed

It is impossible to delete or alter the declaration after this, although it can be used as a template for a re-declaration for the same Site.

The declaration becomes live, when the Submit button is selected. The date on which this is done is Date of Declaration.

An email is automatically sent to the user confirming that a declaration has been made.

The Expert is available at any point in the process and provides context sensitive advice. This advice is sufficiently detailed to allow an average person to make judgments on the potential RF sources in their surroundings and decide on their compliance status, including whether additional investigation or site testing is required.

The engine behind the PAD Wizard is sufficiently sophisticated to disallow a declaration if key information is missing.

A tick box next to a declaration in the View My Declarations listing gives the user the option of making their Statement of Assessment available to anyone who wishes to see it, i.e. add it to the public listing. The public listing only makes the Statement of Assessment available for viewing, not the detail behind it.

The user is able to view a list of all of their declarations by selecting the *View My Declarations* function.

All the declarations ever made by the user are listed. The declarations in the list may be colour coded to indicate their status, for instance:
- Red: Incomplete
- Blue: Current
- Green: Mature (more than one year old)
- Bold Red/Blue/Green: Licence Expired

Each line contains information identifying the declaration.

For each declaration, provided it is not marked as Licence Expired, depending on its status, it is possible to perform certain functions. These functions are:
Highlighting and double clicking the declaration - opens the Statement of Assessment in pdf format for Current and Mature declarations, opens the declaration itself at the point it was saved for Incomplete declarations.
Open Declaration - allows the user to return to an Incomplete declaration. The PAD Wizard starts at the point at which the user last saved the declaration.
View Declaration - allows the user read only and print access to all the information entered in the PAD Wizard in a summary format.
View Supporting Documents - allows the user read only access to a list of any supporting documents that were stored as evidence of compliance. The document itself can then be opened (read only) from the list.
Print Certificate - prints the Statement of Assessment.
Re-declare - only available after *Submit* has been selected, the user can re-validate the declaration for this site using the existing data.
Public Listing - Tick box that, if ticked, adds this declaration to the Public Listing
Table 2 shows the information and functions that is available for each type of declaration.

**Table 2**

| **Field/Function** | **Mature** | **Current** | **Incomplete** | **Licence Expired** |
|---|---|---|---|---|
| Unique Declaration ID | Y | Y | Y | Y |
| Company Name | Y | Y | Y | Y |
| Site Name | Y | Y | Y | Y |
| Site Address and post-code | Y | Y | Y | Y |
| Company Registration Number | Y | Y | Y | Y |
| Date of declaration | Y | Y | N | If applicable |
| Date of expiry | Y | Y | N | If applicable |
| Open declaration | N | N | Y | N |
| View declaration | Y | Y | N | N |
| View supporting documents | Y | Y | N | N |
| Print declaration certificate/detail | Y | Y | N | N |
| Use as template | Y | Y | N | N |
| Re-declare | Y | Y | N | N |
| Public Listing | Y | Y | N | N |

It is possible to sort the list of declarations according to the following criteria
Declaration ID
Company Name
Site Name
Site Post-code
Company Registration Number
Date of declaration
Declaration status
(Mature/Current/Incomplete/Licence Expired)

For each current declaration for all members, declaration reminders are generated:

335 days after Date of Declaration, an email will be automatically generated that will remind them that their declaration is approaching a year old and advising that it should be re-declared.

365 days after Date of Declaration, an email will be automatically generated that will remind them that their declaration is a year old, advising that it should be re-declared will be flagged as Mature in the View My Declarations list. It will be flagged as more than a year old in the Public Listing.

335 days after Date of Payment an email will be automatically generated that will remind them that their licence fee for this Site is due for renewal.

365 days after Date of Payment an email will be automatically generated that will remind them that their licence fee for this Site is overdue. The declaration(s) will be marked as Licence Expired in the *View My Declarations* list. Selection of any function will bring up the payment module. The facility to open/view/update/re-declare and list on the Public Listing will be removed until payment has been made.

If an email address is returned as no longer valid, an automated letter will be generated and sent by post to the user's address held in the database.

As an alternative a fixed price third party audit of the declaration may be requested by the user.

### PAD Wizard

The PAD Wizard is an online tool that enables a user to make a Declaration of Assessment (DoA) against The Physical Agents Directive (electromagnetic fields, optical radiation, noise and vibration).

The user is taken through a step-by-step process consisting of questions and context sensitive help that will give them sufficient information to enable them to identify and make a positive declaration for each item of relevance within their premises or to understand what actions are required prior to making the positive declaration.

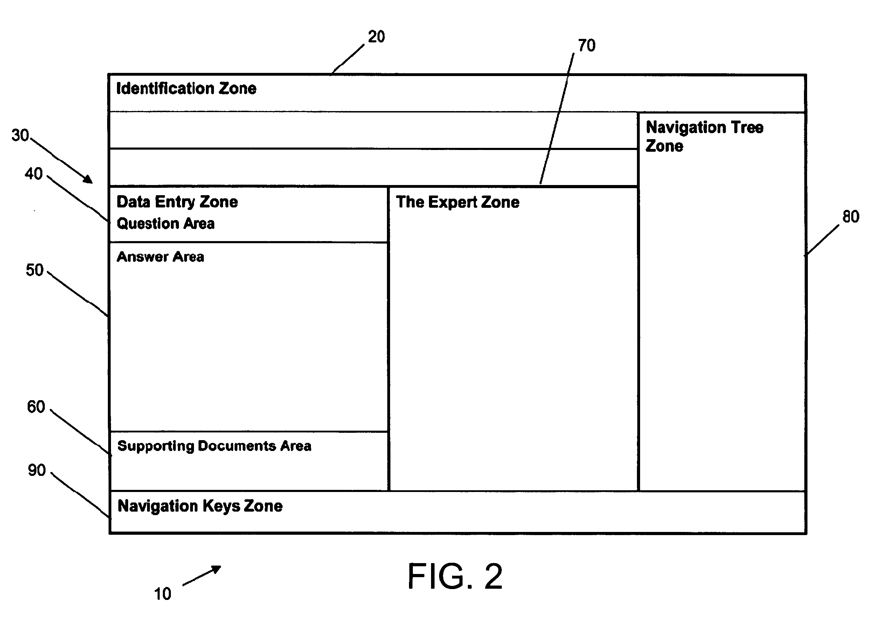

Fig 2 shows the screen 10 that the user sees throughout the PAD Wizard. This screen 10 is divided into zones. These zones are used consistently throughout the PAD Wizard to facilitate usability of the tool.

### Identification Zone 20

This section of the screen is used to give the user information on what he or she is working on, the declaration reference, the section of the wizard to which the current screen relates and the path through the section to this screen.

### Data Entry Zone 30

The left hand side of the screen is used for dialogue with the user. It is further sub-divided into three sections.

### Date Entry Zone 30 - Question Area 40

The Question Area 40 contains the question that needs to be answered or responded to prior to progressing with the assessment.

### Answer Area 50

The answer area 50 is where the user adds data in response to the question. The answer may take the form of tick boxes, drop down lists, multiple selections, tables, fixed input text boxes or free-form text boxes or a combination of all of the above.

### Supporting Document Area 60

The bottom part of this section is used for the storage of supporting (external) documentation, either by downloading the document itself or by adding a link to a web address. This area is only accessible at points in the PAD Wizard when it is possible to add supporting documents.

### The Expert Zone 70

The Expert Zone 70 is the PAD Wizard Expert. This provides context sensitive information for the user to help them answer the question displayed in the Question Area 40. The information is always presented in the same way and consists of textual advice, links to other sites, photographs, calculators or interactive tools.

### Navigation Tree Area 80

The Navigation Tree Zone 80 displays the route that the user must take to complete the assessment. There is visual indicator next to each section to indicate whether it has been completed or not. The user can double click a heading in the navigation tree and jump to that part of the PAD Wizard.

### Navigation Keys Zone 90

The Navigation Keys Zone 90 contains basic function keys that allow the user to step backward and forward through the PAD Wizard, save the information and exit from it.

The Next key can be pressed at any time but will only move down a level if the current page has been completed, otherwise it will move to the next page at the same level.

The Previous key can be used to step back to the previous page. Any information entered by the user on the current page will be automatically saved.

The Save key, saves all the information the user has entered up to this point.

The Exit key will take the user out of the PAD Wizard. Any data entered up to that point is saved.

The user can jump about within the PAD Wizard by double clicking on the relevant branch of the navigation tree.

Questions will be layered and grouped as shown in the example below, as shown in table 3. The arrows show the order in which the questions are asked.

A group is a set of questions within a layer associated with a single question in the layer above. All questions within a group will be asked.

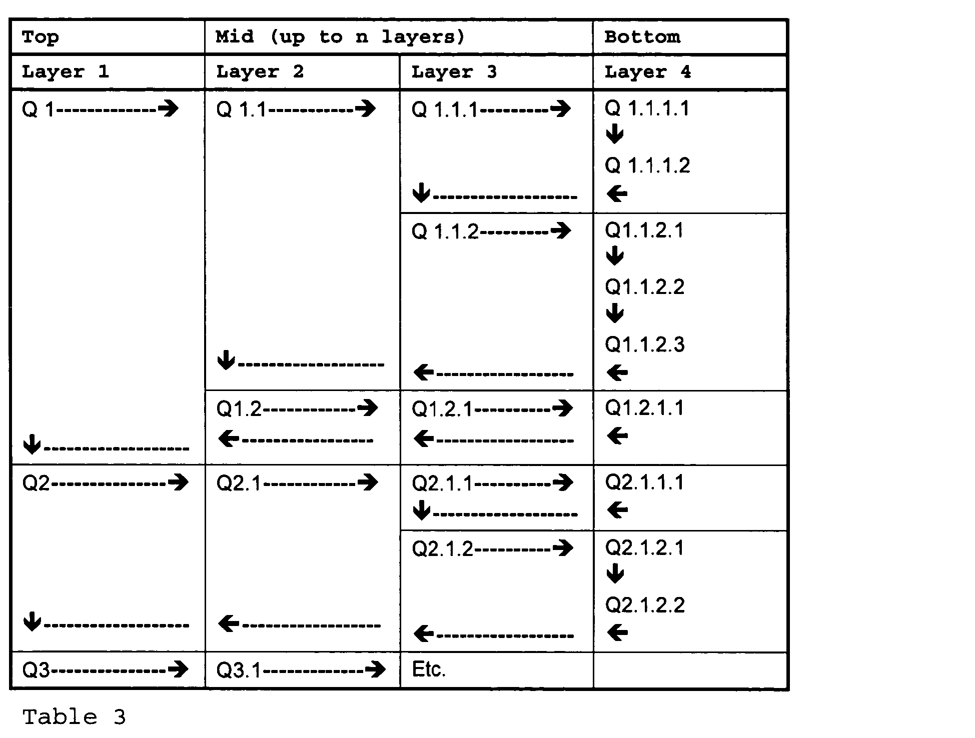

There are three basic types of question.

A **Top layer** question is a leading question to ascertain the relevance of a section to the user. There will only ever be one primary question in a group.

A **Mid layer** question refines the question to the point at which a bottom layer question can be asked. There can be multiple mid layer questions and many mid layer questions within a group.

A **Bottom layer** question requests detail and justification and forces the user to make a judgement as to the compliance of the issue under consideration. This decision will be made by the user based upon the details requested and their interpretation of the advice given within the Expert and how it applies to their specific situation. The user must answer 'yes' to a bottom layer question in order to be able to progress towards making a Declaration. There can be multiple bottom layer questions with a group. A bottom layer question will never have any sub- questions associated with it.

Table 4 shows the action that will be taken by the PAD Wizard in response to answers to a particular question type. The status of the question within its group will be relevant to the action taken.

**Table 4**

| **Layer** | **Response** | **Status** | **Action** |
|---|---|---|---|
| Top layer | Yes | Not applicable | Go to first question in next layer down |
| | No | Not applicable | Go to next primary question |
| Mid layer | Yes | Not applicable | Go to first question in next layer down |
| | No | Another question in this group at this layer? | Another question in group at this layer |
| | No | Last question in this group at this layer? | Go to next question in layer above |
| Bottom layer | Yes | Another question in this group at this layer? | Go to next question in group at this layer |
| | Yes | Last question in this group at this layer? | Go to next question in layer above |
| | No | Another question in this group at this layer? | Go to next question in group at this layer AND do not allow DoA |
| | No | Last question in this group at this layer? | Go to next question in layer above AND do not allow DoA |

The wizard follows a step-by-step process dictated by pre-defined questions and the responses that the user gives to those questions. The overall aim is to guide the user through all the elements that must be considered and give him or her sufficient information, by way of the Expert, to confidently assess their site.

In order to minimise the number of questions a user must answer, the PAD Wizard is divided into a number of sections and sub-sections. A negative response to the first question within a section or sub-sections means that the entire section can be omitted.

The contents of the questions will be dictated by the requirements of the applicable Directive. The PAD Wizard is structured to ensure that all necessary aspects of the user's premises and operation are covered.

The Expert is a context sensitive help resource. The information within the Expert Zone 70 of the screen will change according to what is being requested of the user and will always be presented in a consistent way.

The text in the Expert consists of simple explanations in plain English sufficient to allow the user to understand what is being asked and make a Declaration that they have assessed the risks in line with the Directive. It includes how to answer the question and cover any issues, including all legal and technical aspects.

The Navigation Tree displays the status of the user's progress through the PAD Wizard. The section that is being undertaken is visually identified by highlighting it within the tree.

Any section that is complete will have a tick by its side. A cross indicates that the section is incomplete or that elements within the section are unresolved and a Declaration of Assessment cannot be made.

The Navigation Tree expands as the PAD Wizard progresses. Initially, the tree only shows the main sections that the user must complete, however as a section is identified as relevant, the sub-sections that the user undertakes will appear.

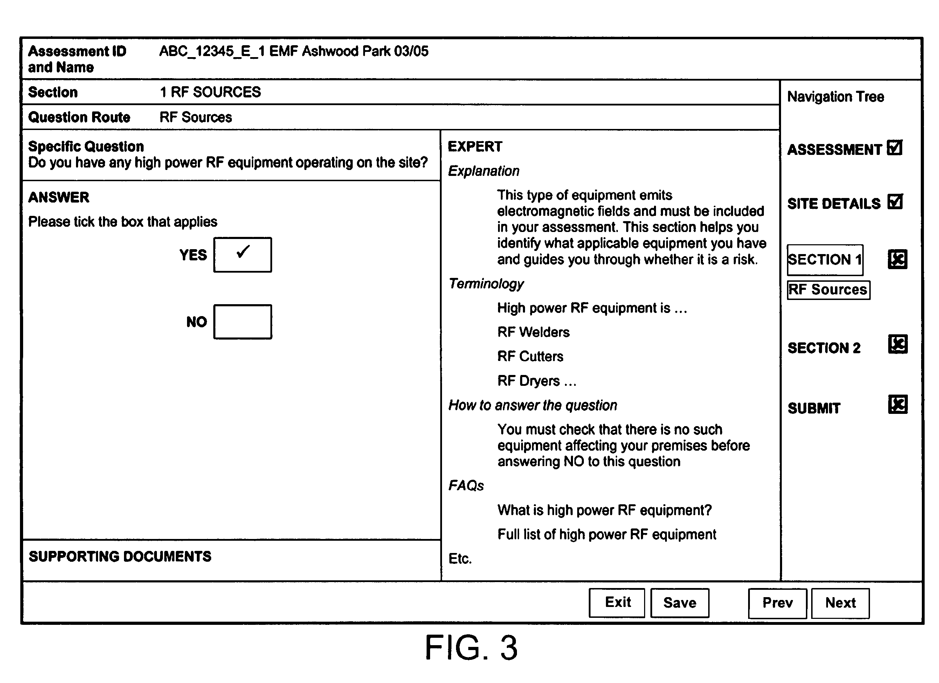

Figures 3 to 6 show screen shots of the PAD Wizard taken during an example declaration. Other types of declaration may be made for other types of equipment including optical, vibration generating and noise generating equipment.

Figure 3 shows a screen shot of the web site during a stage of a wizard requesting information from the user regarding the user's equipment. The PAD wizard has requested information regarding a particular type of equipment (Radio Frequency equipment) and the user has responded with an acknowledgment that they do have some equipment of this type.

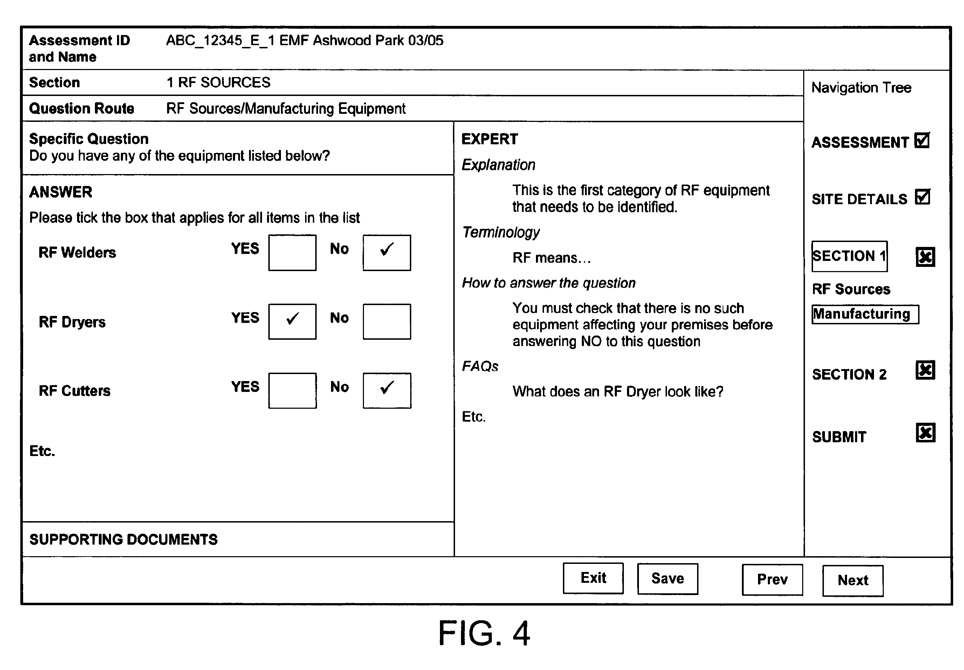

In Figure 4 the user indicates which particular equipment in this category they have.

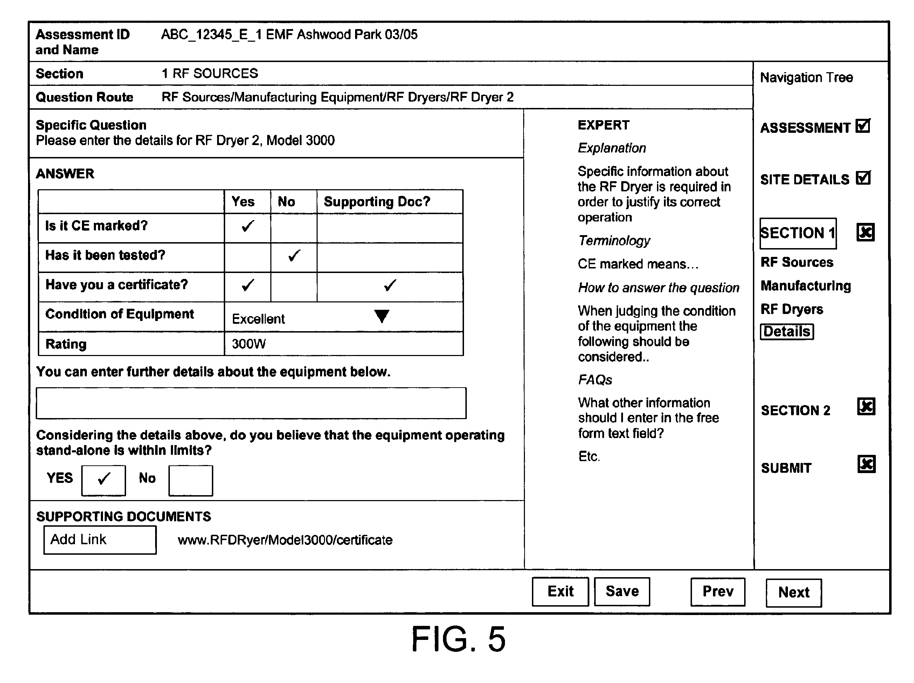

In Figure 5 the user is able to state whether or not the equipment has been certified and also the particular condition and specification of the individual pieces of equipment.

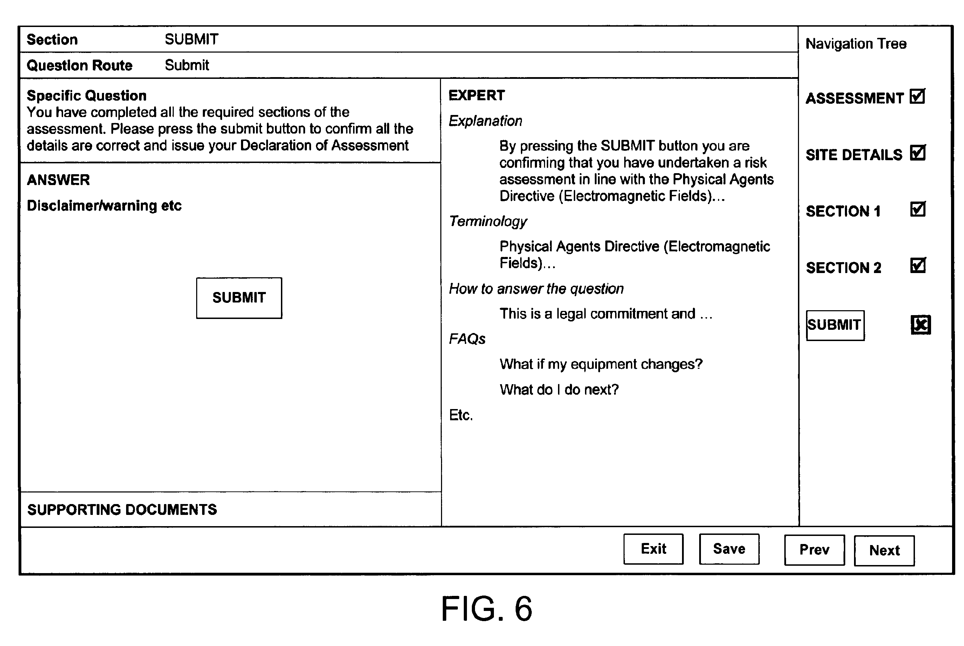

In Figure 6 the user is able to submit the declaration and so complete the declaration process.

As will be appreciated by the skilled person, details of the above embodiments may be varied without departing from the scope of the present invention, as defined by the appended claims.

For example, declarations for other types of statutes or rules may be made under different legislation. An Internet based application is not necessary. A declaration may be made using client server technology, for instance.

## Claims

1. A method for assessing the compliance of a person or undertaking with the requirements of a statute comprising the following steps:
(a) presenting on a data output device of a computer, a first question to a user relating to a first requirement of the statute;
(b) receiving and storing in a storage device the response of the user to the first question;
(c) selecting and presenting a second question to the user related to the same, first requirement of the statute when it is determined that the stored response of the user to the first question meets a first predetermined criterion;
(d) selecting and presenting a third question to the user relating to a different requirement of the statute when it is determined that the stored response of the user to the first question does not meet that first predetermined criterion; and
(e) assessing the compliance of the person or undertaking with the requirements of the statute based on the user's responses.

2. The method of claim 1, further comprising:
(f) iteratively repeating the steps (a), (b) and (c) or (d) in respect of further requirements of the said statute, prior to the step (e) of assessing the compliance of the person or undertaking with the requirements of the statute.

3. The method of claim 1 or claim 2, further comprising the steps of:
(g) receiving and storing in the storage device an updated response of the user; and
(h) repeating the assessing step using the updated response.

4. The method of claim 1, claim 2 or claim 3 further comprising the step of:
(i) providing the user, via the data output device, with assistance relevant to a question when the question is presented to the user.

5. A web based interactive tool for assessing the compliance of a person or undertaking with the requirements of a statute comprising:
a computer data output device for presenting a first question to a user relating to a first requirement of a statute;
a storage device for receiving and storing the response of the user to the first question;
a processor arranged to select and present a second question to the user related to the same, first requirement of the statute when it is determined that the stored response of the user to the first question meets a first predetermined criterion,
selecting and presenting a third question to the user relating to a different requirement of the statute when it is determined that the stored response of the user to the first question does not meet that first predetermined criterion, and
assessing the compliance of the person or undertaking with the requirements of the statute based on the user's responses.

6. The web based interactive tool of claim 5 wherein the processor is further arranged to iteratively repeat
presenting the first question to the user,
receiving and storing the response of the user to the first question, and
selecting and presenting the second question to the user or
selecting and presenting the third question to the user in respect of further requirements of the said statute, prior to assessing the compliance of the person or undertaking with the requirements of the statute.

7. The web based interactive tool of claim 5 or claim 6 wherein the processor is further arranged to receive and store in the storage device an updated response of the user and repeating the assessing step using the updated response.

8. The web based interactive tool of claim 5, claim 6 or claim 7 wherein the processor is further arranged to provide the user, via the data output device, with assistance relevant to a question when the question is presented to the user.

9. A computer program comprising program instructions that, when executed on a computer cause the computer to perform the method of any of claims 1 to 4.
